# EUROPEAN PATENT APPLICATION

(11) **EP 4 472 270 A1**
(43) Date of publication of application: **04.12.2024**
(21) Application number: 22927776.9
(22) Date of filing: 25.02.2022
(51) Int. Cl.: H04W 24/04

(54) **WIRELESS COMMUNICATION METHOD AND TERMINAL DEVICES**

(71) Applicant: GUANGDONG OPPO MOBILE TELECOMMUNICATIONS CORP., LTD., Dongguan Guangdong 523860 (CN)
(72) Inventor: LU, Qianxi, Dongguan, Guangdong 523860 (CN); LENG, Bingxue, Dongguan, Guangdong 523860 (CN); ZHANG, Boyuan, Dongguan, Guangdong 523860 (CN)
(74) Representative: RGTH
(86) International application number: PCT/CN2022/078021
(87) International publication number: WO 2023/159492

(57) **Abstract**

A wireless communication method and a terminal device are provided. The method is applied to the terminal device, where there are a plurality of connections between the terminal device and a network device, and the method includes: performing, in a case where an RLF occurs on a first connection of the plurality of connections, a connection recovery related operation and/or a connection switching related operation.

## Description

### TECHNICAL FIELD

Embodiments of the present application relate to the field of communication, and specifically to a wireless communication method and a terminal device.

### BACKGROUND

In some scenarios, a remote terminal may be connected to network through a plurality of paths. For example, the remote terminal may be directly connected to the network or connected to the network by a relay terminal. When a radio link failure (RLF) occurs in a certain path of the plurality of the paths, how the remote terminal processes to ensure transmission between the remote terminal and the network is an urgent problem to be solved.

### SUMMARY

The present application provides a wireless communication method and a terminal device. When a RLF occurs on a connection between the terminal device and a network device, the terminal device may perform a connection recovery related operation and/or a connection switching related operation, which is conducive to ensuring the transmission between the terminal device and the network device.

In a first aspect, a wireless communication method is provided, which is applied to a terminal device. There are a plurality of connections between the terminal device and a network device. The method includes: in a case where a radio link failure (RLF) occurs in a first connection of the plurality of connections, performing a connection recovery related operation and/or a connection switching related operation.

In a second aspect, a terminal device is provided to perform the method in the mentioned first aspect or any possible implementations of the first aspect. Specifically, the terminal device includes a unit configured to perform the method in the above first aspect or any possible implementations of the first aspect.

In a third aspect, a terminal device is provided. The terminal device includes: a processor and a memory. The memory is configured to store a computer program, and the processor is configured to invoke and execute the computer program stored in the memory to perform the method in the above first aspect or various implementations thereof.

In a fourth aspect, a chip is provided to implement the method in the above first aspect or various implementations thereof.

Specifically, the chip includes: a processor configured to invoke and execute a computer program from a memory to cause a device equipped with the chip to perform the method in the above first aspect or various implementations thereof.

In a fifth aspect, a computer-readable storage medium is provided and is configured to store a computer program, where the computer program causes a computer to perform the method in the above first aspect or various implementations thereof.

In a sixth aspect, a computer program product is provided and includes computer program instructions, and the computer program instructions cause a computer to perform the method in the above first aspect or its various implementations thereof.

In a seventh aspect, a computer program is provided, and the computer program, when being executing on a computer, enables the computer to perform the method in the above first aspect or its various implementations thereof.

Based on the above technical solutions, when the RLF occurs on the first connection of the plurality of connections between the terminal device and the network device, the terminal device may perform a connection recovery related operation to restore the connection where the RLF occurs and/or perform a connection switching related operation to switch the transmission between the terminal device and the network device to a connection where RLF does not occur, which is conducive to ensuring the normal execution of the transmission between the terminal device and the network device.

### BRIEF DESCRIPTION OF THE DRAWINGS

FIG. 1 is a schematic diagram of a communication system architecture, provided in the embodiments of the present application.
FIG. 2 is a schematic diagram of a transmission protocol stack in a 5G system.
FIG. 3 is a schematic diagram of a connection between a terminal device and a network device.
FIG. 4 is a schematic diagram of a wireless communication method, in accordance with the embodiments of the present application.
FIG. 5 is a schematic diagram of a RLF occurring on a Uu connection between a terminal device and a network device.
FIG. 6 is a schematic diagram of a RLF occurring on a relay connection between a terminal device and a network device.
FIG. 7 is a schematic block diagram of a terminal device, in accordance with the embodiments of the present application.
FIG. 8 is a schematic block diagram of a communication device, in accordance with the embodiments of the present application.
FIG. 9 is a schematic block diagram of a chip, in accordance with the embodiments of the present application.

### DETTAILED DESCRIPTION

The technical solutions of the embodiments of the present application will be described below in conjunction with the drawings of the embodiments of the present application. Obviously, the described embodiments are merely some but not all of the embodiments of the present application. All other embodiments obtained based on the embodiments of the present application by the ordinary skilled in the art without creative efforts shall belong to the protection scope of the present application.

The technical solutions of the embodiments of the present application may be applied to various communication systems, such as: global system of mobile communication (GSM), code division multiple access (CDMA) system, wideband code division multiple access (WCDMA) system, general packet radio service (GPRS), long term evolution (LTE) system, advanced long term evolution (LTE-A) system, new radio (NR) system, NR system evolution system, LTE-based on access to unlicensed spectrum (LTE-U) system, NR-based access to unlicensed spectrum (NR-U) system, non-terrestrial networks (NTN) system, universal mobile telecommunication system (UMTS), wireless local area networks (WLAN), wireless fidelity (WiFi), 5th-generation (5G) system or other communication systems.

Generally speaking, traditional communication systems support a limited number of connections and are easy to implement. However, with the development of communication technologies, mobile communication systems will not only support the traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present application may also be applied to these communication systems.

Optionally, the communication system in the embodiments of the present application may be applied to a carrier aggregation (CA) scenario, a dual connectivity (DC) scenario, or a standalone (SA) networking scenario.

Optionally, the communication system in the embodiments of the present application may be applied to an unlicensed spectrum, where the unlicensed spectrum may also be considered as a shared spectrum; alternatively, the communication system in the embodiments of the present application may also be applied to an licensed spectrum, where the licensed spectrum may also be considered as an unshared spectrum.

The embodiments of the present application describe various embodiments in conjunction with a network device and a terminal device, where the terminal device may also be referred to a user equipment (UE), an access terminal, a user unit, a user station, a mobile station, a mobile console, a remote station, a remote terminal, a mobile device, a user terminal, a terminal, a wireless communication device, a user agent or a user device, etc.

The terminal device may be a station (ST) in a WLAN, a cellular phone, a cordless phone, a session initiation protocol (SIP) phone, a wireless local loop (WLL) station, a personal digital assistant (PDA) device, a handheld device with wireless communication function, a computing device or another processing device connected to a wireless modem, a vehicle-mounted device, a wearable device, a terminal device in a next-generation communication system (e.g., a terminal device in an NR network, or a terminal device in a future evolved public land mobile network (PLMN)), etc.

In the embodiments of the present application, the terminal device may be deployed on land, including indoor or outdoor, handheld, wearable or vehicle-mounted; the terminal device may also be deployed on water (e.g., on a ship); and the terminal device may also be deployed in the air (e.g., on an airplane, on a balloon, on a satellite).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, a wireless terminal device in a smart home, etc.

As an example but not limitation, in embodiments of the present application, the terminal device may also be a wearable device. The wearable device may also be called as a wearable smart device, which is a general term for wearable devices developed by performing intelligent design on daily wear (such as glasses, gloves, a watch, clothing, or shoes) using wearable technology. The wearable device is a portable device that is worn directly on a body or is integrated into a user's clothing or accessory. The wearable device is not merely a hardware device, and realizes powerful functions through software support, data interaction, and cloud interaction. Generalized wearable smart devices include a device (such as a smart watch or smart glasses) that has full functionality, large-size and may realize complete or partial functionality without relying on smart phones, and a device (such as various smart bracelets or smart jewelries for monitoring physical signs) that focus on a certain type of application functionality only and need to be used in conjunction with other devices (such as smart phones).

In the embodiments of the present application, the network device may be a device for communicating with a mobile device. The network device may be an access point (AP) in WLAN, a base transceiver station (BTS) in GSM or CDMA, a base station (NodeB, NB) in WCDMA, an evolutional base station (eNB or eNodeB) in LTE, or a relay station or an access point, or a vehicle-mounted device, a wearable device, and a network device (gNB) in an NR network, or a network device in a future evolved PLMN network, or a network device in an NTN network, etc.

As an example but not limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station deployed on land, water or the like.

In embodiments of the present application, a network device may provide services for a cell, and a terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include: a metro cell, a micro cell, a pico cell, a femto cell, or the like. These small cells have the characteristics of small coverage and low transmission power, and are adapted to provide high-speed data transmission services.

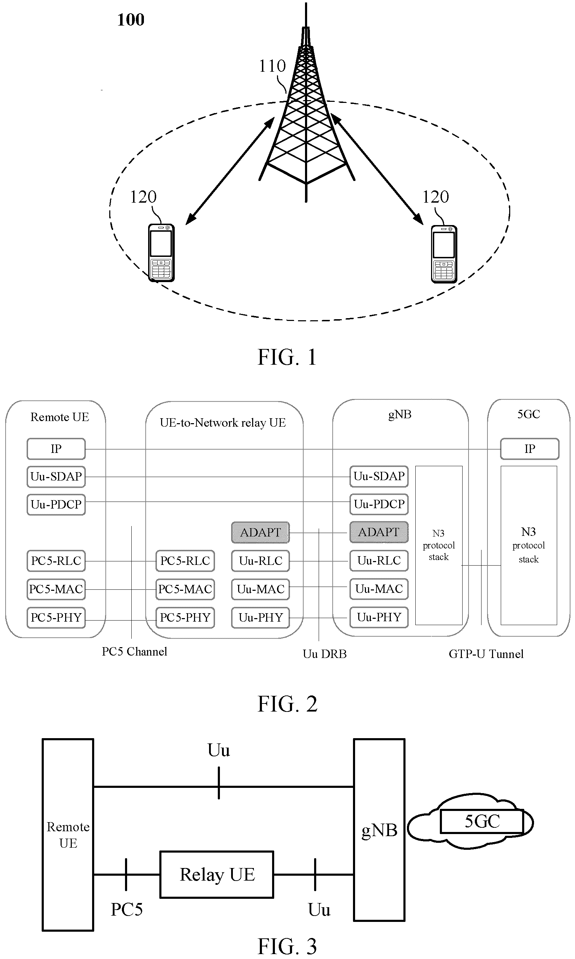

For example, a communication system 100 applied in the embodiments of the present application is shown in FIG. 1. The communication system 100 may include a network device 110, and the network device 110 may be a device to communicate with a terminal device 120 (or referred to as a communication terminal or terminal). The network device 110 may provide communication coverage for a specific geographical area and may communicate with the terminal device located within the coverage area.

FIG. 1 exemplarily shows a network device and two terminal devices. Optionally, the communication system 100 may include a plurality of network devices, and the coverage area of each network device may include another number of terminal devices, which is not limited in the embodiments of the present application.

Optionally, the communication system 100 may further include a network controller, a mobility management entity and other network entities, which is not limited in the embodiments of the present application.

It should be understood that a device having a communication function in a network/system in the embodiments of the present application may be referred to as a communication device. Taking the communication system 100 shown in FIG. 1 as an example, the communication device may include a network device 110 and a terminal device 120 with communication functions. The network device 110 and the terminal device 120 may be the specific devices described above and will not be repeated here; and the communication device may also include other devices, such as a network controller, a mobile management entity and other network entities, in the communication system 100, which is not limited in the embodiments of the present application.

It should be understood that the terms "system" and "network" are often used interchangeably herein. The term "and/or" herein is merely a description of the association relationship of associated objects, and indicates that three relationships may exist. For example, A and/or B may mean three cases: A alone, A and B both, and B alone. Moreover, the symbol "/" herein generally indicates that the associated objects before and after is in an "or" relationship.

It should be understood that the "indication" mentioned in the embodiments of the present application may be a direct indication, an indirect indication, or an indication of an associated relationship. For example, A indicates B, which may mean that A directly indicates B (e.g., B may be obtained through A); A indirectly indicates B (e.g., A indicates C, and B may be obtained through C); or there is an association relationship between A and B.

In the description of the embodiments of the present application, the term "corresponding" may indicate a direct or indirect correspondence between two items, or an association relationship between the two items, or a relationship of indication and being indicated, a relationship of configuring and being configured, etc.

In embodiments of the present application, "predefinition" may be achieved by pre-saving corresponding codes, tables or other methods that may be used to indicate relevant information in a device (e.g., including a terminal device and a network device). The present application does not limit its specific implementation method. For example, predefinition may refer to be defined in the protocol.

In the embodiments of the present application, the "protocol" may refer to a standard protocol in the communication field, for example, it may include an LTE protocol, an NR protocol, and related protocols applied to future communication systems, and the present application does not limit this.

In some scenarios, a layer 2-based terminal-to-network (UE-to-Network) relay UE is introduced, and the UE-to-Network relay UE may directly connect to the network. Specifically, the remote terminal is connected to an access network (such as gNB) and a core network (CN) (such as 5GC) by the UE-to-Network relay UE.

FIG. 2 shows a schematic diagram of a transmission protocol stack of a 5G system, specifically involving a remote UE, a layer 2 UE-to-Network relay UE, a gNB, and a 5GC. As shown in FIG. 2, the remote UE may include the following layers: internet protocol (IP), Uu-service data adaptation protocol (SDAP), Uu-packet data convergence protocol (PDCP), PC5-radio link control (RLC), PC5-media access control (MAC), and PC5-physics (PHY). The UE-to-Network relay UE may include the following layers: adaptation (ADAPT), PC5-RLC, PC5-MAC, PC5-PHY, Uu-RLC, Uu-MAC, and Uu-PHY. The gNB may include the following layers: Uu-SDAP, Uu-PDCP, ADAPT, Uu-RLC, Uu-MAC, Uu-PHY, and N3 protocol stack. The 5GC may include the following layers: IP, and N3 protocol stack.

As shown in FIG. 2, the adaptation (ADAPT) layer of the relay UE is set above the control plane and user plane RLC layer of the Uu interface between the relay UE and the gNB. Uu-SDAP, Uu-PDCP and radio resource control (RRC) are terminated between the remote UE and the gNB, and RLC, MAC and PHY are terminated in each link (including the link between the remote UE and the relay UE and the link between the relay UE and the gNB).

In some embodiments, the link between the relay UE and the network may be called a Uu link, or a Uu path, the direct link between the remote UE and the network may also be called a Uu link, or a Uu path, and the link between the remote UE and the relay UE may be called a PC5 link, or a PC5 path.

For the uplink of L2 UE-to-Network relay UE:
the adaptation layer of the relay UE supports access to uplink bearer mapping between PC5 channels for performing transmission on the Uu path between the relay UE and the network and access the Uu channel. For uplink relay services, different end-to-end bearers (e.g., signaling radio bearers (SRB), data radio bearers (DRB)) of a same remote UE and/or different remote UEs may be N: 1 mapped and perform data multiplexing on one Uu channel.

The adaptation layer of the relay UE includes the identification information of the remote terminal of the uplink service pending relayed and the identification information of the radio bearer of the remote terminal, so that the gNB associates the received data packets of the specific packet data convergence protocol (PDCP) entity associated with the radio bearer of the remote terminal.

For the downlink of L2 UE-to-Network relay UE:
the adaptation layer of the relay UE may be used to support downlink bearer mapping at the gNB to map the end-to-end radio bearers (e.g. SRBs, DRBs) of the remote terminal to Uu channels by the Uu path between the relay UE and the network. The adaptation layer of the relay UE may be used to support downlink N: 1 bearer mapping and data multiplexing between a plurality of end-to-end radio bearers (e.g. SRBs, DRBs) of a remote UE and/or different remote UEs and Uu channels on the Uu path between the relay UE and the network.

The adaptation layer of the relay UE includes identification information of the remote terminal of the downlink service pending relayed. The identification information of the radio bearer of the remote terminal and the identification information of the remote terminal need to be placed in the adaptation layer of the relay UE through the gNB, so that the relay UE may map the data packets received from the radio bearer of the remote terminal to the PC5 channel associated with the radio bearer.

In some scenarios, the remote UE may be connected to the network by a plurality of paths, for example, the plurality of paths include a direct path between the remote UE and the network, and a relay path connecting the remote UE to the network by a relay UE.

For example, as shown in FIG. 3, the remote UE may be connected to the network device by a relay UE and directly connected to the network device via a Uu interface. The remote UE and the relay UE are connected and communicated via the PC5 interface, and the relay UE and the network device are connected and communicated via the Uu interface. In some scenarios, if there are multi-hop relay UEs, the relay UEs are connected and communicated via the PC5 interface, and the last relay UE and the network device are connected and communicated via the Uu interface.

When a radio link failure (RLF) occurs in one path of the plurality of paths, how the remote UE processes to ensure transmission between the remote UE and the network is an urgent problem to be solved.

To facilitate understanding of the technical solutions of the embodiments of the present application, the technical solutions of the present application are described in detail below through specific embodiments. The above related arts may be, as optional solutions, arbitrarily combined with the technical solutions of the embodiments of the present application, and they all belong to the protection scope of the embodiments of the present application. The embodiments of the present application include at least part of the following contents.

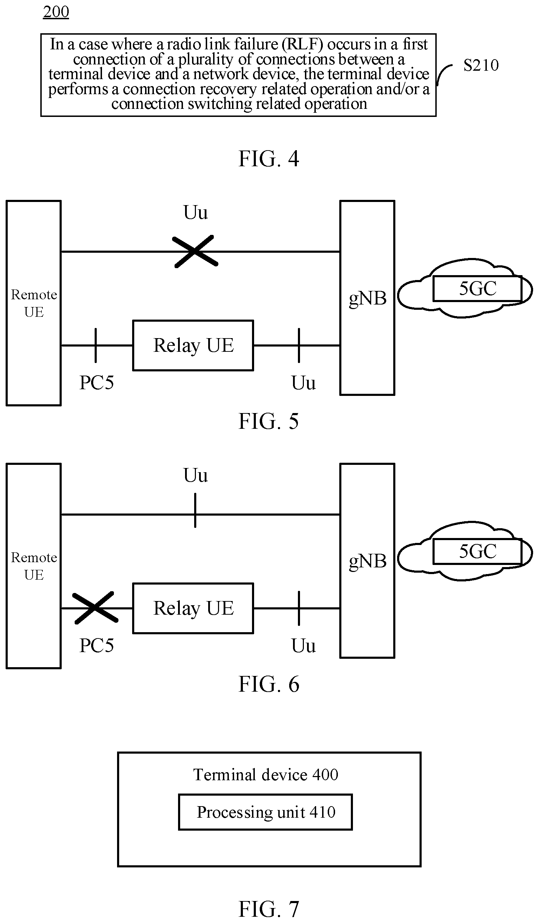

FIG. 4 is a schematic flowchart of a wireless communication method 200 according to embodiments of the present application. The method 200 may be performed by a terminal device in the communication system shown in FIG. 1. There are a plurality of connections between the terminal device and the network device.

As shown in FIG.4, the method 200 includes the following contents.

In S210: in a case where a radio link failure (RLF) occurs in a first connection of the plurality of connections, the terminal device performs a connection recovery related operation and/or a connection switching related operation.

In some embodiments of the present application, the connection recovery related operation may be used to recover the first connection where the RLF occurs, or to recover all the connections between the terminal device and the network device. The recovery here may be completed through the RRC reestablishment process.

In some embodiments of the present application, the connection switching related operation may be used to switch the transmission between the terminal device and the network device to a connection where no the RLF occurs.

In some embodiments, the plurality of connections include a direct connection between the terminal device and the network device, and a relay connection between the terminal device and the network device. That is, the terminal device may be directly connected to the network device, and may also be connected to the network device by the relay terminal.

It should be understood that the embodiments of the present application do not limit the number of relay terminals between the terminal device and the network device. For example, the terminal device may be connected to the network device by one relay terminal, or may be connected to the network device by a plurality of relay terminals.

In some embodiments, the relay terminal may be a layer 2 relay, or a layer 3 relay, which is not limited in the present application.

In some embodiments, there may be one relay connection between the terminal device and the network device, or there may be a plurality of relay connections, which is not limited in the present application.

For example, the terminal device may be connected to the network device by a relay UE-1, and may also be connected to the network device by a relay UE-2. The relay connection between the terminal device and the network device may include a relay connection in which the terminal device is connected to the network device by the relay UE-1, and a relay connection in which the terminal device is connected to the network device by the relay UE-2.

In some embodiments, the relay connection may include a PC5 connection between the terminal device and the relay terminal and a Uu connection between the relay terminal and the network device.

In some embodiments, the direct connection may also be expressed as a direct link, a direct path, a Uu link, or a Uu path.

In some embodiments, the PC5 connection is also called a PC5 link or a PC5 path.

In some embodiments, the first connection may include a direct connection between the terminal device and the network device. This is recorded as case 1.

That is, the RLF occurs on the Uu connection between the terminal device and the network device, as shown in FIG. 5.

In some embodiments, the first connection may include a relay connection between the terminal device and the network device. This is recorded as case 2.

In some embodiments, for case 2, the RLF occurring on the first connection may refer to the RLF occurring on the PC5 connection between the terminal device and the relay terminal, as shown in FIG. 6.

In some embodiments, the RLF occurring on the direct connection between the terminal device and the network device may refer to the RLF occurring on the Uu interface between the terminal device and the network device.

In some embodiments, the RLF occurring on the relay connection between the terminal device and the network device may include the RLF occurring on the PC5 interface between the terminal device and the relay terminal.

In some embodiments, a triggering event of the RLF occurring on the Uu connection includes at least one of the following:
a timer T310 on a primary cell (PCell) timing out;
a timer T312 on the primary cell timing out;
when timers T300, T301, T304, T311 and T319 are not running, receiving a random access problem indication from a master cell group (MCG) media access control (MAC);
determining that the maximum number of retransmissions has been reached according to an indication of the MCG RLC;
when the timer T304 is not running, receiving a continuous uplink listen before talk (LBT) failure indication from the MCG MAC; and
receiving an integrity check failure indication of an SRB1 or SRB2.

The above triggering conditions may exclude a sounding of integrity check failure in the RRCReestablishment message.

In some embodiments, a triggering event of the RLF occurring on the PC5 connection includes at least one of the following:
determining that the maximum number of the retransmissions has been reached according to an indication of a sidelink RLC entity;
the timer T400 for a specific destination timing out;
determining the maximum number of consecutive hybrid automatic repeat request (HARQ) discontinuous transmission (DTX) that have reached a specific destination according to an indication of an MAC entity; and
receiving an integrity check failure indication of a sidelink packet data convergence protocol (PDCP) entity, the PDCP entity being associated with a sidelink SL-SRB2 or SL-SRB3 for a specific destination.

In some embodiments, a starting condition of the T300 includes:
transmission of an RRCSetupRequest message.

In some embodiments, a stopping condition of the T300 includes:
receiving an RRCSetup message or an RRCReject message;
cell reselection; and
a higher layer terminating connection reestablishment.

In some embodiments, a starting condition of the T301 includes:
transmission of an RRCReestablishmentRequest message.

In some embodiments, a stopping condition of the T301 includes:
receiving an RRCReestablishment message or the RRCSetup message, and the selected cell becoming unsuitable.

In some embodiments, a starting condition of the T304 includes:
receiving an RRCReconfiguration message including reconfigurationWithSync, or
performing a conditional reconfiguration, for example, applying a stored RRCReconfiguration message containing reconfigurationWithSync.

In some embodiments, a stopping condition of the T304 includes:
completing successfully a random access to the corresponding special cell (SpCell), and releasing the timer T304 of a secondary cell group (SCG).

For the T304 corresponding to the MCG, after T304 times out, when switching from the NR or within NR, the RRC reestablishment process is started, and when switching to the NR, operations defined in the specification applicable to source radio access technology (RAT) are performed. If a dual active protocol stack (DAPS) bearer is configured and RLF does not occur in a source PCell, the failure notification process is started.

For the T304 corresponding to the SCG, after T304 times out, the network synchronization reconfiguration failure is notified by starting the SCG failure notification process.

In some embodiments, a starting condition of the T310 includes:
sounding a physical layer problem of the SpCell, for example, receiving N310 consecutive out-of-synchronization (OOS) indications from a lower layer.

In some embodiments, a stopping condition of the T310 includes:
receiving N311 consecutive in-sync (IS) indications corresponding to the lower layer SpCell;
receiving RRCReconfiguration including reconfiguration With Sync for a cell group;
reconfiguring rlf-TimersAndConstant;
initiating the connection reestablishment process;
performing a conditional reconfiguration, for example, applying a stored RRCReconfiguration message including the reconfiguration With Sync to the cell group;
initiating the MCG failure notification process; and
releasing the SCG, if the T310 is saved in the SCG related configuration.

In some embodiments, a starting condition of the T311 includes: initiating an RRC connection reestablishment process.

In some embodiments, a stopping condition of the T311 includes:
selecting a suitable NR cell or a cell using other RAT.

In some embodiments, the T312 is configured in the MCG related configuration, and a starting condition of the T312 includes:
when the T310 in the PCell related configuration is running, a measurement report corresponding to a measurement identity is triggered, where the measurement identity is configured with the T312 and useT312 is set to true.

In some embodiments, the T312 is configured in the SCG related configuration, and the useT312 is set to true. The starting condition of the T312 includes:
when the T310 in the PSCell related configuration is running, the measurement report corresponding to the measurement identity is triggered, where the measurement identity is configured with the T312.

In some embodiments, a stopping condition of the T312 includes:
receiving the N311 consecutive IS indications corresponding to the SpCell from the lower layer;
receiving the RRCReconfiguration including reconfiguration With Sync for the cell group;
receiving MobilityFromNRCommand;
initiating the connection reestablishment process;
reconfiguring the rlf-TimersAndConstant;
initiating the MCG failure notification process;
performing the conditional reconfiguration, for example, applying the stored RRCReconfiguration message including the reconfiguration With Sync to the cell group;
the T310 in the corresponding SpCell timing out; and
releasing the SCG, if the T312 is saved in the SCG related configuration.

In some embodiments, a starting condition of the T319 includes:
transmission of the RRCResumeRequest message.

In some other embodiments, a stopping condition of the T319 includes:
receiving the RRCResume, the RRCSetup, or the RRCRelease including RRCRelease suspending configuration or RRCRej ect suspending configuration; and
cell selection.

In some embodiments, a starting condition of the T400 includes:
transmission of RRCReconfigurationSidelink.

In some embodiments, a stopping condition of the T400 includes:
receiving a RRCReconfigurationFailureSidelink message or a RRCReconfigurationCompleteSidelink message.

In some embodiments, performing the connection recovery related operation includes but is not limited to at least one of the following:
performing an RRC connection reestablishment process between the terminal device and the network device;
suspending or reestablishing transmission on a remaining connection of the plurality of connections except the first connection;
suspending or reestablishing transmission on the first connection;
releasing the remaining connection of the plurality of connections except the first connection; and
releasing the first connection.

In some embodiments, performing the connection switching related operation includes at least one of the following:
transmitting indication information to the network device through a remaining connection of the plurality of connections except the first connection, where the indication information is used to indicate that the RLF occurs on the first connection;
switching the transmission between the terminal device and the network device to the remaining connection of the plurality of connections except the first connection;
setting a carrier on the remaining connection of the plurality of connections except the first connection as a primary carrier; and
setting a carrier on the remaining connection of the plurality of connections except the first connection or a cell corresponding to the carrier as a primary cell.

In some embodiments, after receiving the indication information from the terminal device, the network device may determine that the RLF occurs on the first connection.

Furthermore, the network device and the terminal device may switch the pending transmission to a connection where the RLF has not occurred. In other words, the network device and the terminal device have a consistent understanding of the connection used to perform subsequent transmissions, and perform the subsequent transmissions through a connection where the RLF has not occurred, which is conducive to ensuring transmission performance.

In some embodiments, switching the transmission between the terminal device and the network device to the remaining connection of the plurality of connections except the first connection may include:
switching SRB and/or DRB to the remaining connection of the plurality of connections except the first connection.

In some embodiments, the terminal device sets the carrier on the remaining connection of the plurality of connections except the first connection as the primary carrier.

That is, the terminal device sets the carrier on the connection where the RLF does not occur as the primary carrier, which is conducive to ensuring reliable transmission of services between the terminal device and the network device, and is conducive to ensuring control and management of the terminal device by the network device.

In some embodiments, the terminal device sets the carrier on the remaining connection of the plurality of connections except the first connection or the cell corresponding to the carrier as the PCell.

That is, the terminal device uses the carrier on the connection where the RLF does not occur or the cell corresponding to the carrier as the PCell, which is conducive to ensuring the reliable transmission of the services between the terminal device and the network device, and is conducive to ensuring the control and management of the terminal device by the network device.

In some embodiments, a first carrier on the remaining connection is set as the primary carrier, a first cell corresponding to the first carrier is set as the PCell, and the configuration information of the primary carrier or the configuration information of the PCell includes the tracking area code (TAC) and/or the public land mobile network (PLMN) obtained by the terminal device from the first carrier or the first cell.

That is, the first carrier is a carrier where the RLF has not occurred, and the first cell is a cell where the RLF has not occurred. The primary carrier is configured on the carrier where the RLF has not occurred, or the PCell is configured on the carrier where the RLF has not occurred or on the cell corresponding to the carrier. This is beneficial to the control and management of the terminal device by the network device, and is also beneficial to ensure the reliable transmission of the services between the terminal device and the network device.

In some embodiments, the connection switching related operation is performed when a first condition is satisfied, and the first condition includes at least one of the following:
configuring an RLC channel for the SRB and/or the DRB on a remaining connection;
obtaining at least one of a home cell, the primary cell, the TAC and the PLMN of the terminal device from the network device through the remaining connection; and
triggering the RLF of the first connection by a specific triggering event.

Optionally, the first connection is a direct connection, and the specific triggering event may include the timer T310 or T312 on the PCell timing out.

Optionally, the first connection is a relay connection, and the specific triggering event may include: determining, according to an indication of a sidelink RLC entity, that a maximum number of retransmissions for a specific destination has been reached, or the timer T400 for the specific destination timing out.

The following describes the behavior of the terminal device when the RLF occurs on the Uu connection and the RLF occurs on the PC5 connection in combination with the embodiment I and the embodiment II.

Embodiment I: the RLF occurs on the Uu connection between the terminal device and the network device.

In this case, performing the connection recovery related operation includes but is not limited to at least one of the following:
performing the RRC connection reestablishment process between the terminal device and the network device;
suspending or reestablishing transmission on the relay connection between the terminal device and the network device;
suspending or reestablishing transmission on the Uu connection between the terminal device and the network device;
releasing the relay connection between the terminal device and the network device; and
releasing the Uu connection between the terminal device and the network device.

In some embodiments, performing the connection switching related operation includes at least one of the following:
transmitting first indication information to the network device through the relay connection between the terminal device and the network device, where the first indication information is used to indicate that the RLF occurs on the Uu connection;
switching the transmission between the terminal device and the network device to the relay connection between the terminal device and the network device;
setting the carrier on the relay connection between the terminal device and the network device as the primary carrier; and
setting the carrier on the relay connection between the terminal device and the network device or the cell corresponding to the carrier as the primary cell.

In some embodiments, switching the transmission between the terminal device and the network device to the relay connection between the terminal device and the network device may include:
switching the SRB and/or DRB to the relay connection between the terminal device and the network device.

In some embodiments, the first carrier on the relay connection is set as the primary carrier, or the first cell corresponding to the first carrier on the relay connection is set as the PCell, then the configuration information of the primary carrier or the configuration information of the PCell includes the TAC and/or PLMN obtained by the terminal device from the first carrier or the first cell.

In some embodiments, the connection switching related operation is performed when a first condition is satisfied, and the first condition includes at least one of the following:
configuring the RLC channel for the SRB and/or DRB on the relay connection;
obtaining at least one of the home cell, the primary cell, the TAC and the PLMN of the terminal device from the network device through the relay connection; and
triggering the RLF occurring on the Uu connection by a specific trigger event.

In some embodiments, none of the carriers on the Uu connection is the primary carrier, or in other words, none of the cells corresponding to the carriers on the Uu connection is the PCell. In this case, at least one carrier on the Uu connection is configured with a reference signal for radio link monitoring (RLM) and/or a public search space for transmitting a first physical downlink control channel (PDCCH). The first PDCCH is scrambled based on a random access radio network temporary identity (RA-RNTI), and the first PDCCH is used to schedule a random access response (RAR).

In some embodiments, the reference signal for the RLM may be used to trigger the timer T310.

In some embodiments, the RAR is used to report a random access problem indication.

Embodiment II: the RLF occurs on the relay connection between the terminal device and the network device, for example, the RLF occurs on the PC5 connection between the terminal device and the relay terminal.

In this case, performing the connection recovery related operation includes but is not limited to at least one of the following:
performing the RRC connection reestablishment process between the terminal device and the network device;
suspending or reestablishing the transmission on the Uu connection between the terminal device and the network device;
suspending or reestablishing the transmission on the relay connection between the terminal device and the network device;
releasing the Uu connection between the terminal device and the network device; and
releasing the relay connection between the terminal device and the network device, for example, releasing the PC5 connection between the terminal device and the relay terminal.

In some embodiments, performing the connection switching related operation includes at least one of the following:
transmitting second indication information to the network device through the Uu connection between the terminal device and the network device, where the second indication information is used to indicate that the RLF occurs on the relay connection between the terminal device and the network device (e.g., the PC5 connection between the terminal device and the relay terminal);
switching the transmission between the terminal device and the network device to the Uu connection between the terminal device and the network device;
setting the carrier on the Uu connection between the terminal device and the network device as the primary carrier; and
setting the carrier on the Uu connection between the terminal device and the network device or the cell corresponding to the carrier is set as the primary cell.

In some embodiments, switching the transmission between the terminal device and the network device to the Uu connection between the terminal device and the network device may include:
switching the SRB and/or DRB to the Uu connection between the terminal device and the network device.

In some embodiments, the second carrier on the Uu connection is set as the primary carrier, or the second cell corresponding to the second carrier is set as the PCell, then the configuration information of the primary carrier or the configuration information of the PCell includes the TAC and/or PLMN obtained by the terminal device from the second carrier or the second cell.

In some embodiments, the connection switching related operation is performed when a first condition is satisfied, and the first condition includes at least one of the following:
configuring an RLC channel for the SRB and/or DRB on the Uu connection between the terminal device and the network device;
obtaining at least one of the home cell, the primary cell, the TAC and the PLMN of the terminal device from the network device through the Uu connection between the terminal device and the network device; and
triggering the RLF occurring on the relay connection between the terminal device and the network device (e.g., the PC5 connection between the terminal device and the relay terminal) by a specific trigger event.

In summary, in the embodiments of the present application, in a case where the RLF occurs on the first connection of the plurality of connections between the terminal device and the network device, the terminal device may perform the connection recovery related operation to recover the connection where the RLF occurs and/or perform the connection switching related operation to switch the transmission between the terminal device and the network device to the connection where the RLF does not occur, which is conducive to ensuring the normal execution of the transmission between the terminal device and the network device.

The above, in combination with FIGS. 4 to 6, describes in detail the method embodiments of the present application. The following, in combination with FIGS. 7 to 9, describes in detail the device embodiments of the present application. It should be understood that the device embodiments and the method embodiments correspond to each other, and similar descriptions may refer to the method embodiments.

FIG. 7 is a schematic block diagram of a terminal device 400 according to the embodiments of the present application. As shown in FIG. 7, the terminal device 400 includes:
a processing unit 410, configured to perform a connection recovery related operation and/or a connection switching related operation when the radio link failure (RLF) occurs in the first connection of the plurality of connections between the terminal device and the network device.

In some embodiments, performing the connection recovery related operation includes at least one of the following:
performing the radio resource control (RRC) connection reestablishment process between the terminal device and the network device;
suspending or reestablishing the transmission on a remaining connection of the plurality of connections except the first connection;
suspending or reestablishing the transmission on the first connection;
releasing the remaining connection of the plurality of connections except the first connection; and
releasing the first connection.

In some embodiments, performing the connection switching related operation includes at least one of the following:
transmitting indication information to the network device through a remaining connection of the plurality of connections except the first connection, where the indication information is used to indicate that the RLF occurs on the first connection;
switching the transmission between the terminal device and the network device to the remaining connection of the plurality of connections except the first connection;
setting the carrier on the remaining connection of the plurality of connections except the first connection as the primary carrier; and
setting the carrier on the remaining connection of the plurality of connections except the first connection or the cell corresponding to the carrier as the primary cell.

In some embodiments, switching the transmission between the terminal device and the network device to the remaining connection of the plurality of connections except the first connection includes:
switching the signaling radio bearers (SRB) and/or the data radio bearers (DRB) to the remaining connection of the plurality of connections except the first connection.

In some embodiments, the first carrier on the remaining connection is set as the primary carrier, or the first cell corresponding to the first carrier on the remaining connection is set as the primary cell, and the configuration information of the primary carrier includes the tracking area code (TAC) and/or the public land mobile network (PLMN) obtained by the terminal device from the first carrier or the first cell.

In some embodiments, the connection switching related operation is performed when a first condition is satisfied, and the first condition includes at least one of the following:
configuring a radio link control (RLC) channel for the SRB and/or the DRB on a maining connection;
obtaining at least one of the home cell, the primary cell, the TAC and the PLMN of the terminal device from the network device through the remaining connection; and
triggering the RLF occurring on the first connection by a specific triggering event.

In some embodiments, the first connection is the direct connection between the terminal device and the network device, and the remaining connection includes the relay connection between the terminal device and the network device.

In some embodiments, at least one carrier on the first connection is configured with a reference signal for the radio link monitoring (RLM) and/or a public search space for transmitting a first physical downlink control channel (PDCCH), where the first PDCCH is scrambled based on the random access radio network temporary identity (RA-RNTI), and the first PDCCH is used to schedule a random access response (RAR).

In some embodiments, none of the carriers on the first connection is the primary carrier.

In some embodiments, the triggering event of the RLF occurring on the first connection includes at least one of the following:
the timer T310 on the primary cell timing out;
the timer T312 on the primary cell timing out;
when timers T300, T301, T304, T311 and T319 are not running, receiving a random access problem indication from the primary cell group (MCG) media access control (MAC);
determining that the maximum number of retransmissions has been reached according to the indication of the MCG RLC;
when the timer T304 is not running, receiving a continuous uplink listen before talk (LBT) failure indication from the MCG MAC; and
receiving an integrity check failure indication from the SRB1 or SRB2.

In some embodiments, the first connection is the relay connection between the terminal device and the network device, and the remaining connection includes the direct connection between the terminal device and the network device.

In some embodiments, the triggering event of the RLF occurring on the first connection includes at least one of the following:
determining that the maximum number of retransmissions has been reached according to the indication of the sidelink RLC entity;
the timer T400 for the specific destination timing out;
determining the maximum number of consecutive hybrid automatic repeat request (HARQ) discontinuous transmission (DTX) that have been reached the specific destination according to the indication of the MAC entity; and
receiving an integrity check failure indication of the sidelink packet data convergence protocol (PDCP) entity, where the PDCP entity is associated with a sidelink SL-SRB2 or SL-SRB3 for the specific destination.

Optionally, in some embodiments, the above communication unit may be a communication interface or a transceiver, or an input/output interface of a communication chip or an input/output interface of a system-on-chip. The above processing unit may be one or more processor.

It should be understood that the terminal device 400 according to the embodiments of the present application may correspond to the terminal device in the method embodiments of the present application, and the above and other operations and/or functions of each unit in the terminal device 400 are used for realizing the corresponding processes of the terminal device in the method 200 shown in FIGS. 4 to 6, which will not be repeated here for the sake of brevity.

In summary, in the embodiments of the present application, when the RLF occurs on the first connection of the plurality of connections between the terminal device and the network device, the terminal device may perform the connection recovery related operation to recover the connection where the RLF occurs and/or perform the connection switching related operation to switch the transmission between the terminal device and the network device to a connection where the RLF does not occur, which is conducive to ensuring the normal execution of the transmission between the terminal device and the network device.

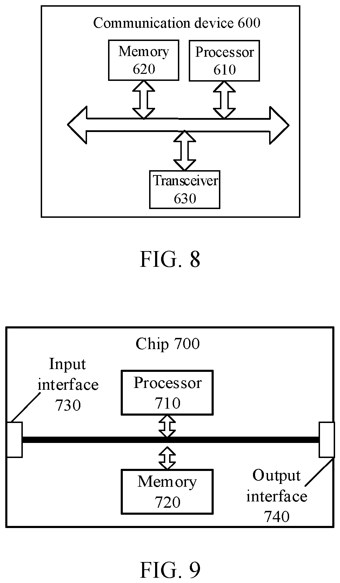

FIG. 8 is a schematic structural diagram of a communication device 600, provided by the embodiments of the present application. The communication device 600 shown in FIG. 8 includes a processor 610, and the processor 610 may invoke and execute a computer program from a memory to implement the method in the embodiments of the present application.

Optionally, as shown in FIG. 8, the communication device 600 may further include a memory 620. The processor 610 may invoke and execute a computer program from the memory 620 to implement the method in the embodiments of the present application.

The memory 620 may be a separate device independent of the processor 610, or may be integrated into the processor 610.

Optionally, as shown in FIG. 8, the communication device 600 may further include a transceiver 630, and the processor 610 may control the transceiver 630 to communicate with other devices, specifically, may control the transceiver 630 to transmit information or data to other devices, or receive information or data transmitted by other devices.

The transceiver 630 may include a transmitter and a receiver. The transceiver 630 may further include an antenna, and the number of the antenna(s) may be one or more.

Optionally, the communication device 600 may specifically be the network device of the embodiments of the present application, and the communication device 600 may implement the corresponding processes implemented by the network device in each method of the embodiments of the present application, which will not be described in detail here for the sake of brevity.

Optionally, the communication device 600 may specifically be a mobile terminal/terminal device of the embodiments of the present application, and the communication device 600 may implement the corresponding processes implemented by the mobile terminal/terminal device in each method of the embodiments of the present application, which will not be described in detail here for the sake of brevity.

FIG. 9 is a schematic structural diagram of a chip of the embodiments of the present application. The chip 700 shown in FIG. 9 includes a processor 710, and the processor 710 may invoke and execute a computer program from a memory to implement the method in the embodiments of the present application.

Optionally, as shown in FIG. 9, the chip 700 may further include a memory 720. The processor 710 may invoke and execute a computer program from the memory 720 to implement the method in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, may control the input interface 730 to obtain information or data transmitted by other devices or chips.

Optionally, the chip 700 may further include an output interface 740. The processor 710 may control the output interface 740 to communicate with other devices or chips, and specifically, may control the output interface 740 to output information or data to other devices or chips.

Optionally, the chip may be applied to the network device in the embodiments of the present application, and the chip may implement the corresponding processes implemented by the network device in each method of the embodiments of the present application. For the sake of brevity, they will not be repeated here.

Optionally, the chip may be applied to the mobile terminal/terminal device in the embodiments of the present application, and the chip may implement the corresponding processes implemented by the mobile terminal/terminal device in each method of the embodiments of the present application. For the sake of brevity, they will not be repeated here.

It should be understood that the chip mentioned in the embodiments of the present application may also be called as a system-level-chip, a system chip, a chip system or a system-on-chip, or the like.

It should be understood that the processor of the embodiments of the present application may be an integrated circuit chip with signal processing capabilities. In the implementation process, each step of the above method embodiments may be completed by an integrated logic circuit of hardware in a processor or instructions in a software form. The processor above may be a general purpose processor, a digital signal processor (DSP), an application specific integrated circuit (ASIC), a field programmable gate array (FPGA) or other programmable logic devices, a discrete gate or transistor logic device, a discrete hardware component, or the like. The various methods, steps and logic block diagrams disclosed in the embodiments of the present application may be implemented or executed. The general purpose processor may be a microprocessor or the processor may also be any conventional processor, etc. The steps of the method disclosed in the embodiments of the present application may be directly implemented as being executed by a hardware decoding processor, or may be implemented by a combination of hardware and software modules in the decoding processor. The software module may be located in a random access memory, a flash memory, a read-only memory, a programmable read-only memory, or an electrically erasable programmable memory, a register, or other mature storage media in the art. The storage medium is located in the memory, and the processor reads the information in the memory and completes the steps of the above method in combination with its hardware.

It can be understood that the memory in the embodiments of the present application may be a volatile (transitory) memory or a non-volatile (non-transitory) memory, or may include both volatile and non-volatile memories. Herein, the non-volatile memory may be a read-only memory (ROM), a programmable ROM (PROM), an erasable programmable read-only memory (EPROM), an electrically erasable programmable read-only memory (EEPROM), or a flash memory. The volatile memory may be a random access memory (RAM), which is used as an external cache memory. By way of example but not limitation, a variety of forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct memory bus random access memory (Direct Rambus RAM, DR RAM). It should be noted that the memory of the system and method described herein is intended to include, but not limited to, these and any other suitable types of memories.

It should be understood that the above-mentioned memory is exemplary but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM) and a direct memory bus random access memory (Direct Rambus RAM, DR RAM), or the like. That is, the memory in the embodiments of the present application is intended to include but is not limited to these and any other suitable types of memories.

The embodiments of the present application further provide a computer-readable storage medium configured to store a computer program.

Optionally, the computer-readable storage medium may be applied to the network device in the embodiments of the present application, and the computer program enables a computer to perform the corresponding processes implemented by the network device in the various methods of the embodiments of the present application. For the sake of brevity, they are not repeated here.

Optionally, the computer-readable storage medium may be applied to the mobile terminal/terminal device in the embodiments of the present application, and the computer program enables a computer to perform the corresponding processes implemented by the mobile terminal/terminal device in the various methods of the embodiments of the present application. For the sake of brevity, they are not repeated here.

The embodiments of the present application further provide a computer program product including computer program instructions.

Optionally, the computer program product may be applied to the network device in the embodiments of the present application, and the computer program instructions enable a computer to perform the corresponding processes implemented by the network device in the various methods of the embodiments of the present application. For the sake of brevity, they are not repeated here.

Optionally, the computer program product may be applied to the mobile terminal/terminal device in the embodiments of the present application, and the computer program instructions enable a computer to perform the corresponding processes implemented by the mobile terminal/terminal device in the various methods of the embodiments of the present application. For the sake of brevity, they are not repeated here.

The embodiments of the present application further provide a computer program.

Optionally, the computer program may be applied to the network device in the embodiments of the present application. The computer program, when run on a computer, causes the computer to perform the corresponding processes implemented by the network device in the various methods in the embodiments of the present application. For the sake of brevity, they are not described here.

Optionally, the computer program may be applied to the mobile terminal/terminal device in the embodiments of the present application. The computer program, when run on a computer, causes the computer to perform the corresponding processes implemented by the mobile terminal/terminal device in the various methods of the embodiments of the present application. For the sake of brevity, they are not repeated here.

Those ordinary skilled in the art may realize that, units and algorithm steps of the examples described in combination with the embodiments disclosed herein can be implemented in electronic hardware or in a combination of computer software and electronic hardware. Whether these functions are performed by means of hardware or software depends on a specific application and a design constraint of the technical solution. A skilled person may use different methods for each specific application to implement the described functions, but such implementation should not be considered beyond the scope of the present disclosure.

It may be clearly understood by those skilled in the art that for convenience and brevity of the description, the specific working processes of the system, the device and the unit described above may refer to the corresponding processes in the above method embodiments, and details will not be repeated here.

In several embodiments provided by the present application, it will be understood that the disclosed system, device and method may be implemented in other ways. For example, the device embodiments described above are only schematic. For example, division of the units is only division of logical functions, and there may be other division methods in an actual implementation, for example, a plurality of units or components may be combined or integrated into another system, or some features may be ignored or not performed. In addition, the mutual coupling or direct coupling or communicative connection displayed or discussed may be indirect coupling or communicative connection of devices or units via some interfaces, which may be in electrical, mechanical, or other forms.

The units illustrated as separate components may be or may not be physically separated, and the components shown as units may be or may not be physical units, that is, they may be located in one place, or may be distributed onto a plurality of network units. A part or all of the units may be selected according to actual needs to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in a form of a software functional unit and sold or used as an independent product, they may be stored in a computer-readable storage medium. Based on this understanding, the technical solution of the present application essentially, or a part of the technical solution that contributes to the prior art, or a part of the technical solution, may be embodied in a form of a software product, and the computer software product is stored in a storage medium, and includes several instructions for enabling a computer device (which may be a personal computer, a server, a network device, or the like) to perform all or some of steps of the methods described in the various embodiments of the present application. The storage medium mentioned above includes a USB flash drive (U disk), a mobile hard disk, a Read-Only Memory (ROM), a Random Access Memory (RAM), a disk, an optical disk, and various mediums that may store program codes.

The foregoing descriptions are merely specific implementations of the present application, but the protection scope of the present application is not limited thereto. Any skilled person in the art could readily conceive of changes or replacements within the technical scope of the present application, which shall all be included in the protection scope of the present application. Therefore, the protection scope of the present application shall be subject to the protection scope of the claims.

## Claims

1. A wireless communication method, **characterized by** applied to a terminal device, wherein there are a plurality of connections between the terminal device and a network device, and the method comprises:
performing, in a case where a radio link failure (RLF) occurs on a first connection of the plurality of connections, a connection recovery related operation and/or a connection switching related operation.

2. The method according to claim 1, wherein performing the connection recovery related operation comprises at least one of following:
performing a radio resource control (RRC) connection reestablishment process between the terminal device and the network device;
suspending or reestablishing transmission on a remaining connection of the plurality of connections except the first connection;
suspending or reestablishing transmission on the first connection;
releasing the remaining connection of the plurality of connections except the first connection; and
releasing the first connection.

3. The method according to claim 1 or 2, wherein performing the connection switching related operation comprises at least one of following:
transmitting indication information to the network device through a remaining connection of the plurality of connections except the first connection, wherein the indication information is used to indicate that the RLF occurs on the first connection;
switching transmission between the terminal device and the network device to the remaining connection of the plurality of connections except the first connection;
setting a carrier on the remaining connection of the plurality of connections except the first connection as a primary carrier; and
setting a carrier on the remaining connection of the plurality of connections except the first connection or a cell corresponding to the carrier as a primary cell.

4. The method according to claim 3, wherein switching the transmission between the terminal device and the network device to the remaining connection of the plurality of connections except the first connection comprises:
switching signaling radio bearers (SRB) and/or data radio bearers (DRB) to the remaining connection of the plurality of connections except the first connection.

5. The method according to claim 3 or 4, wherein a first carrier on the remaining connection is set as the primary carrier, or a first cell corresponding to the first carrier on the remaining connection is set as the primary cell, and configuration information of the primary carrier comprises a tracking area code (TAC) and/or a public land mobile network (PLMN) obtained by the terminal device from the first carrier or the first cell.

6. The method according to any one of claims 2 to 5, wherein the connection switching related operation is performed in a case where a first condition is satisfied, and the first condition comprises at least one of following:
configuring a radio link control (RLC) channel for SRB and/or DRB on the remaining connection;
obtaining at least one of a home cell, a primary cell, a TAC and a PLMN of the terminal device from the network device through the remaining connection; and
triggering the RLF occurring on the first connection by a specific triggering event.

7. The method according to any one of claims 2 to 6, wherein the first connection is a direct connection between the terminal device and the network device, and the remaining connection comprises a relay connection between the terminal device and the network device.

8. The method according to claim 7, wherein at least one carrier on the first connection is configured with a reference signal used for radio link monitoring (RLM) and/or a public search space used for transmitting a first physical downlink control channel (PDCCH), wherein the first PDCCH is scrambled based on a random access radio network temporary identity (RA-RNTI), and the first PDCCH is used to schedule a random access response (RAR).

9. The method according to claim 8, wherein none of the carrier(s) on the first connection is a primary carrier.

10. The method according to any one of claims 7 to 9, wherein a triggering event of the RLF occurring on the first connection comprises at least one of following:
a timer T310 on a primary cell timing out;
a timer T312 on the primary cell timing out;
in a case where timers T300, T301, T304, T311 and T319 are not running, receiving a random access problem indication from a master cell group (MCG) media access control (MAC);
determining that a maximum number of retransmissions has been reached according to an MCG RLC indication;
in a case where the timer T304 is not running, receiving a continuous uplink listen before talk (LBT) failure indication from the MCG MAC; and
receiving an integrity check failure indication of SRB1 or SRB2.

11. The method according to any one of claims 1 to 6, wherein the first connection is a relay connection between the terminal device and the network device, and a remaining connection comprises a direct connection between the terminal device and the network device.

12. The method according to claim 11, wherein a triggering event of the RLF occurring on the first connection comprises at least one of following:
determining that a maximum number of retransmissions has been reached according to an indication of a sidelink RLC entity;
a timer T400 for a specific destination timing out;
determining a maximum number of consecutive hybrid automatic repeat request (HARQ) discontinuous transmission (DTX) that have reached a specific destination according to an indication of an MAC entity; and
receiving an integrity check failure indication of a sidelink packet data convergence protocol (PDCP) entity, wherein the PDCP entity is associated with a sidelink SL-SRB2 or SL-SRB3 for the specific destination.

13. A terminal device, comprising:
a processing unit, configured to perform a connection recovery related operation and/or a connection switching related operation in a case where a radio link failure (RLF) occurs on a first connection in a plurality of connections between the terminal device and a network device.

14. The terminal device according to claim 13, wherein performing the connection recovery related operation comprises at least one of following:
performing a radio resource control (RRC) connection reestablishment process between the terminal device and the network device;
suspending or reestablishing transmission on a remaining connection of the plurality of connections except the first connection;
suspending or reestablishing transmission on the first connection;
releasing the remaining connection in the plurality of connections except the first connection; and
releasing the first connection.

15. The terminal device according to claim 13 or 14, wherein performing the connection switching related operation comprises at least one of following:
transmitting indication information to the network device through a remaining connection of the plurality of connections except the first connection, wherein the indication information is used to indicate that the RLF occurs on the first connection;
switching transmission between the terminal device and the network device to the remaining connection of the plurality of connections except the first connection;
setting a carrier on the remaining connection of the plurality of connections except the first connection as a primary carrier; and
setting a carrier on the remaining connection of the plurality of connections except the first connection or a cell corresponding to the carrier as a primary cell.

16. The terminal device according to claim 15, wherein switching the transmission between the terminal device and the network device to the remaining connection of the plurality of connections except the first connection comprises:
switching signaling radio bearers (SRB) and/or data radio bearers (DRB) to the remaining connection of the plurality of connections except the first connection.

17. The terminal device according to claim 15 or 16, wherein a first carrier on the remaining connection is set as the primary carrier, or a first cell corresponding to the first carrier on the remaining connection is set as the primary cell, and configuration information of the primary carrier comprises a tracking area code (TAC) and/or a public land mobile network (PLMN) obtained by the terminal device from the first carrier or the first cell.

18. The terminal device according to any one of claims 14 to 17, wherein the connection switching related operation is performed in a case where a first condition is met, and the first condition comprises at least one of following:
configuring a radio link control (RLC) channel for SRB and/or DRB on the remaining connection;
obtaining at least one of a home cell, a primary cell, a TAC and a PLMN of the terminal device from the network device through the remaining connection; and
triggering the RLF occurring on the first connection by a specific triggering event.

19. The terminal device according to any one of claims 14 to 18, wherein the first connection is a direct connection between the terminal device and the network device, and the remaining connection comprises a relay connection between the terminal device and the network device.

20. The terminal device according to claim 19, wherein at least one carrier on the first connection is configured with a reference signal used for radio link monitoring (RLM) and/or a public search space used for transmitting a first physical downlink control channel (PDCCH), wherein the first PDCCH is scrambled based on a random access radio network temporary identity (RA-RNTI), and the first PDCCH is used to schedule a random access response (RAR).

21. The terminal device according to claim 21, wherein none of the carrier(s) in the first connection is the primary carrier.

22. The terminal device according to any one of claims 19 to 21, wherein a triggering event of the RLF occurring on the first connection comprises at least one of following:
a timer T310 on a primary cell timing out;
a timer T312 on the primary cell timing out;
in a case where timers T300, T301, T304, T311 and T319 are not running, receiving a random access problem indication from a master cell group (MCG) media access control (MAC);
determining that a maximum number of retransmissions has been reached according to an MCG RLC indication;
in a case where the timer T304 is not running, receiving a continuous uplink listen before talk (LBT) failure indication from the MCG MAC; and
receiving an integrity check failure indication of SRB1 or SRB2.

23. The terminal device according to any one of claims 14 to 18, wherein the first connection is a relay connection between the terminal device and the network device, and a remaining connection comprises a direct connection between the terminal device and the network device.

24. The terminal device according to claim 23, wherein a triggering event of the RLF occurring on the first connection comprises at least one of following:
determining that a maximum number of retransmissions has been reached according to an indication of a sidelink RLC entity;
a timer T400 for a specific destination timing out;
determining a maximum number of consecutive hybrid automatic repeat request (HARQ) discontinuous transmission (DTX) that have reached a specific destination according to an indication of an MAC entity; and
receiving an integrity check failure indication of a sidelink packet data convergence protocol (PDCP) entity, wherein the PDCP entity is associated with a sidelink SL-SRB2 or SL-SRB3 for the specific destination.

25. A terminal device, comprising a processor and a memory, wherein the memory is configured to store a computer program, and the processor is configured to invoke and execute the computer program stored in the memory to perform the method of any one of claims 1 to 12.

26. A chip, comprising: a processor configured to invoke and execute a computer program from a memory to cause a device equipped with the chip to perform the method of any one of claims 1 to 12.

27. A computer-readable storage medium, configured to store a computer program, wherein the computer program causes a computer to perform the method of any one of claims 1 to 12.

28. A computer program product, comprising computer program instructions, wherein the computer program instructions cause a computer to perform the method of any one of claims 1 to 12.

29. A computer program, wherein the computer program causes a computer to perform the method of any one of claims 1 to 12.
